# EUROPÄISCHE PATENTSCHRIFT

(11) **EP 1 830 982 B1**
(45) Veröffentlichungstag und Bekanntmachung des Hinweises auf die Patenterteilung: **18.08.2010**
(21) Anmeldenummer: 05820017.1
(22) Anmeldetag: 22.12.2005
(51) Int. Cl.: B23K 37/04, B25B 11/00

(54) **VORRICHTUNG ZUM FESTSPANNEN VON MINDESTENS ZWEI BAUTEILEN, INSBESONDERE VON BAUTEILEN FÜR LUFTFAHRZEUGE, ZUR VERBINDUNG DER BAUTEILE DURCH EINE MITTELS REIBRÜHRSCHWEISSEN ZWISCHEN ZWEI BAUTEILKANTEN GEBILDETE SCHWEISSNAHT**
DEVICE FOR CLAMPING AT LEAST TWO COMPONENTS, ESPECIALLY AIRCRAFT COMPONENTS, IN ORDER TO JOIN THE SAME BY MEANS OF A WELDED SEAM FORMED BETWEEN TWO EDGES OF THE COMPONENTS USING FRICTION STIR WELDING
DISPOSITIF DE SERRAGE D'AU MOINS DEUX COMPOSANTS, NOTAMMENT DE COMPOSANTS D'AERONEFS, POUR LA CONNEXION DES COMPOSANTS PAR L'INTERMEDIAIRE D'UN CORDON DE SOUDURE FORME PAR SOUDAGE PAR FRICTION ET AGITATION ENTRE DEUX ARETES DE COMPOSANTS

(30) Priorität: 22.12.2004 DE 102004062997
(43) Veröffentlichungstag der Anmeldung: 12.09.2007
(73) Patentinhaber: Airbus Operations GmbH, 21129 Hamburg (DE)
(72) Erfinder: LOHWASSER, Daniela, 27804 Berne (DE)
(74) Vertreter: Kopf, Korbinian Paul
(86) Internationale Anmeldenummer: PCT/EP2005/013902
(87) Internationale Veröffentlichungsnummer: WO 2006/066934

(56) Entgegenhaltungen:
- US-A- 5 249 785
- US-A1- 2002 092 149
- PATENT ABSTRACTS OF JAPAN Bd. 2003, Nr. 12, 5. Dezember 2003 (2003-12-05) & JP 2003 266184 A (SHIN MEIWA IND CO LTD), 24. September 2003 (2003-09-24)

## Beschreibung

Die Erfindung betrifft eine Vorrichtung zum Festspannen von mindestens zwei Bauteilen, insbesondere von Bauteilen für Luftfahrzeuge, zur Verbindung der Bauteile durch eine mittels Reibrührschweißen zwischen zwei Bauteilkanten gebildete Schweißnaht, wobei die Bauteile jeweils durch mehrere Stützelemente aufgenommen sind und unterhalb der Schweißnaht eine Schweißunterlage angeordnet ist.

Bekannte Vorrichtungen zum Einspannen von Bauteilen zum Reibrührschweißen bestehen aus einem massiven, in der Regel ebenen Unterbau, auf dem die zu verschweißenden Bauteile aufliegen. Die Bauteile werden während des Schweißvorganges durch massive Spanner mechanisch festgeklemmt. Die Spanner müssen auf Grund der beim Reibrührschweißen auftretenden hohen mechanischen Kräfte recht stabil ausgelegt sein. Derartige Spanner können beispielsweise durch verschraubte Klemmbacken oder durch hydraulisch betätigbare Klemmbacken realisiert werden.

In beiden Fällen ergibt sich zunächst ein hoher konstruktiver Aufwand. Außerdem schränken die mechanischen Spanner die Abmessungen der zu verarbeitenden Bauteile ein, da die Spanner von außen möglichst nahe an den Nahtbildungsbereich herangeführt werden müssen, um die Bauteile in diesem Bereich möglichst effektiv auf einer Schweißunterlage niederzuhalten. Sehr großformatige und komplexe Bauteile, beispielsweise in der Form von Rumpfschalen im Flugzeugbau, können daher mittels der bekannten Vorrichtungen zum Einspannen von Bauteilen nicht durch Reibrührschweißen verbunden werden.

Ferner gestaltet sich das Einspannen der mittels Reibrührschweißen zu verbindenden Bauteile recht zeitaufwändig.

Darüber hinaus bedingt die massive Ausführung der bekannten Vorrichtungen zum Einspannen von Bauteilen zum Reibrührschweißen eine hohe Wärmeabfuhr aus dem Nahtbildungsbereich, sodass die Vortriebsgeschwindigkeiten in vielen Fällen verringert werden müssen.

Schließlich lassen sich diese vorbekannten Vorrichtungen nicht auf einfache Art und Weise an unterschiedliche Bauteilgeometrien, insbesondere an verschiedene einfache oder doppelt gekrümmte Bauteile, anpassen. Es muss vielmehr für jede vorhandene Bauteilgeometrie eine spezielle Vorrichtung zum Einspannen vorgehalten werden, wodurch sich der Lagerhaltungsaufwand und die Kosten beträchtlich erhöhen.

Weiterhin sind ebene Vakuumspanntische bekannt, wodurch sich der zeitliche Aufwand beim Spannen der zu verarbeitenden Bauteile verringert. Diese Vakuumspanntische sind allerdings gleichfalls sehr massiv aufgebaut, sodass sich ebenfalls das Problem einer erhöhten Wärmeabfuhr aus dem Nahtbildungsbereich stellt.

Darüber hinaus lassen sich die ebenen Vakuumspanntische nicht auf einfache Art und Weise an verschiedene Bauteilgeometrien anpassen.

Aufgrund der vorstehend aufgezeigten Nachteile sind die vorbekannten Ausführungsformen von Vorrichtungen zum Einspannen von Bauteilen zum Reibrührschweißen nur bedingt zur kostengünstigen und effizienten Einbindung in die heutigen, hochflexiblen Produktionsprozesse geeignet.

Aufgabe der Erfindung ist es, die Nachteile der bekannten Ausführungsformen von Vorrichtungen zum Einspannen von Bauteilen zum Reibrührschweißen weitgehend zu vermeiden.

Diese Aufgabe wird durch eine Vorrichtung mit den Merkmalen des Patentanspruchs 1 gelöst.

Dadurch, dass die Schweißunterlage auf beiden Seiten jeweils mindestens eine Halteeinrichtung aufweist die zum Festspannen der Bauteile mit Unterdruck beaufschlagbar ist,
können die mittels Reibrührschweißen auf Stoß zu verbindenden Bauteile auf einfache Art und Weise durch das Anlegen von Unterdruck fest gespannt werden. Darüber hinaus ermöglicht die erfindungsgemäße Vorrichtung das variable Festspannen von unterschiedlichen einfach oder doppelt gekrümmten Bauteilen mit ein und derselben Vorrichtung, wobei im Wesentlichen jeweils nur die Halteeinrichtungen und/oder die Schweißunterlage an die verschiedenen Bauteilgeometrien angepasst werden müssen.

Eine weitere vorteilhafte Ausgestaltung der erfindungsgemäßen Vorrichtung sieht vor, dass die Halteeinrichtungen lösbar auf einem Unterbau befestigt sind. Hierdurch ist beispielsweise ein schnelles und einfaches Austauschen von vorgehaltenen Halteeinrichtungen für unterschiedliche Bauteilgeometrien und/oder Bauteilabmessungen gegeben. Darüber hinaus stellt der Unterbau eine stabile, belastbare Verbindung zu einer Grundplatte her, auf der die gesamte erfindungsgemäße Vorrichtung ruht.

Eine weitere vorteilhafte Ausgestaltung sieht vor, dass eine Oberflächengeometrie der Halteeinrichtungen an eine Oberflächengeometrie der Bauteile und/oder an Abmessungen der Bauteile angepasst ist.

Diese Ausgestaltung ermöglicht das sichere Festspannen von Bauteilen mit unterschiedlichen Geometrien und/oder verschiedenen Abmessungen. Insbesondere lassen sich mittels der erfindungsgemäßen Vorrichtung einfach und/oder doppelt gekrümmte Bauteile sicher zum Reibrührschweißen fixieren, wobei lediglich die Halteeinrichtungen und gegebenenfalls die Schweißunterlage ausgetauscht werden müssen.

Gemäß einer weiteren vorteilhaften Ausgestaltung der Vorrichtung ist eine Breite der Halteeinrichtungen insbesondere an unterschiedliche Materialstärken der Bauteile angepasst.

Diese Ausgestaltung gewährleistet eine flexible Anpassbarkeit der erfindungsgemäßen Vorrichtung an eine Vielzahl von verschiedenen Bauteilen, insbesondere an Bauteile mit unterschiedlichen Materialstärken. Hierbei ist die Breite der Halteeinrichtungen beispielsweise umso größer, je höher die Materialstärke der zu verschweißenden Bauteile ist, um einen ausreichenden Anpressdruck während des Reibrührschweißprozesses zu erreichen. Denn bei steigenden Materialstärken erhöhen sich die beim Reibrührschweißen auftretenden Kräfte. Weiterhin sind die Halteeinrichtungen gegebenenfalls jeweils individuell an einfach und/oder doppelt gekrümmt ausgebildete Bauteile angepasst.

Nach Maßgabe einer weiteren vorteilhaften Ausgestaltung ist die Schweißunterlage im Wesentlichen mittig unterhalb der Schweißnaht in einem Nahtbildungsbereich angeordnet und austauschbar ausgebildet.

Hierdurch ist ein einfacher Austausch der verschleißanfälligen Schweißunterlage möglich. Weiterhin ergibt sich eine im Wesentlichen symmetrische Abstützung der zu verschweißenden Bauteile, was zu einer verbesserten Güte der Schweißnaht beiträgt. Darüber hinaus ist gegebenenfalls auch eine Feinanpassung an die geometrische Gestalt der Bauteile im Nahtbildungsbereich, beispielsweise durch unterschiedliche Schweißunterlagen für verschiedene Bauteilgeometrien, möglich. Die Schweißunterlage ist bevorzugt mit einem metallischen Material gebildet, um eine ausreichende Standzeit bzw. Verschleißfestigkeit im Reibrührschweißbetrieb zu gewährleisten.

In Gemäßheit einer weiteren vorteilhaften Ausgestaltung bilden die Schweißunterlage und die Halteeinrichtungen eine Auflagefläche.

Hierdurch ist gewährleistet, dass die mittels Reibrührschweißen zu verbindenden Bauteile möglichst vollflächig auf der erfindungsgemäßen Vorrichtung aufliegen, sodass sich eine hohe Güte und Maßhaltigkeit der mittels Reibrührschweißen gebildeten Schweißnaht ergibt. Die Schweißunterlage und die Halteeinrichtungen bilden hierbei eine gedachte, im Wesentlichen durchgehende Auflagefläche.

Gemäß einer weiteren Ausführungsform der erfindungsgemäßen Vorrichtung sind die Bauteile im Nahtbildungsbereich mittels mindestens eines Andruckorgans, insbesondere einer Andruckrolle, auf die Schweißunterlage andrückbar.

Hierdurch ergibt sich während des Reibrührschweißens eine nochmals verbesserte Positionierung der Bauteile im Nahtbildungsbereich.

Nach Maßgabe einer weiteren vorteilhaften Ausgestaltung sind die Stützelemente zur Anpassung an unterschiedliche Oberflächengeometrien und/oder Abmessungen der Bauteile verfahrbar ausgebildet.

Hierdurch können Bauteile mit unterschiedlichen Geometrien und/oder Abmessungen flexibel aufgenommen werden. Eine Vielzahl von Stützelementen ist hierbei bevorzugt zu beiden Seiten der Halteeinrichtungen angeordnet, sodass auch großformatige Bauteile sicher aufgenommen werden können. Die Stützelemente sind hierbei im Wesentlichen senkrecht verfahrbar ausgebildet. Darüber hinaus können die Stützelemente zusätzlich auch in der Ebene positionierbar sein
In Gemäßheit einer weiteren Ausgestaltung der Erfindung weisen die Stützelemente Anbindungselemente, insbesondere Saugnäpfe, zum Fixieren der Bauteile auf. Diese Ausführungsvariante ermöglicht einen sicheren Halt auch im Falle von großformatigen Bauteilen, wie zum Beispiel Rumpfschalen. Anstatt von Saugnäpfen können auch andere Anbindungselemente, wie zum Beispiel Klammern oder dergleichen, eingesetzt werden.

Gemäß einer weiteren vorteilhaften Ausgestaltung sind die Halteeinrichtungen und/oder der Unterbau mit einem wärmeisolierenden Material gebildet.

Hierdurch ist sichergestellt, dass die während des Reibrührschweißprozesses im Nahtbildungsbereich bzw. in der Schweißnaht entstehende Wärme nur zu einem geringen Anteil in die Vorrichtung abfließt, so dass die Vortriebsgeschwindigkeit des Reibrührschweißwerkzeuges erhöht werden kann.

Nach Maßgabe einer weiteren bevorzugten Ausführungsform der Erfindung ist im Bereich der Halteeinrichtungen und/oder des Unterbaus mindestens ein Positionierorgan zum Heranführen und/oder zur Ausrichtung der Bauteile auf der Schweißunterlage und/oder den Halteeinrichtungen angeordnet.

Mittels dieser Ausgestaltung ist eine zumindest teilautomatische Positionierung der zu verschweißenden Bauteile auf der Vorrichtung möglich. Die Positionierorgane können beispielsweise als Gelenkarme mit endseitigen Saugnäpfen ausgebildet sein. Die Gelenkarme können zum Beispiel mit Aktuatoren, insbesondere mit Hydraulikkolben, Elektroantrieben oder dergleichen, betätigbar sein. Weiterhin können die Gelenkarme auch mit Sensoren zur Erfassung der eigenen Position im Raum oder der Position der Bauteile im Raum ausgestattet sein. Die Steuerung der Gelenkarme erfolgt zum Beispiel mit einer geeigneten Steuer- und Regeleinrichtung. Mittels der Steuer- und Regeleinrichtung kann zugleich die Kontrolle des Reibrührschweißwerkzeuges sowie der Halteeinrichtungen erfolgen.

### In der Zeichnung zeigt:

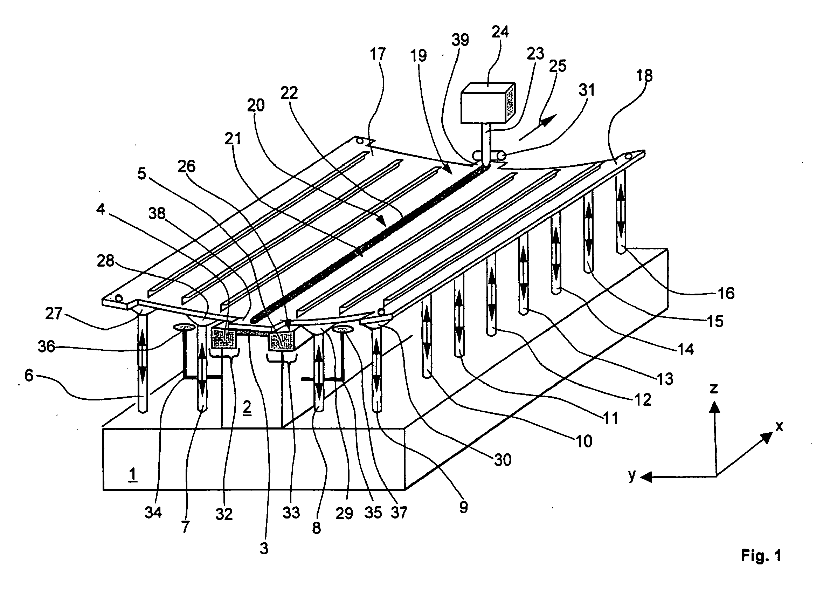

- **Fig. 1**: Eine perspektivische Darstellung der erfindungsgemäßen Vorrichtung zum Festspannen von Bauteilen während des Reibrührschweißens von Bauteilen entlang von Bauteilkanten.

Die **Fig. 1** zeigt eine perspektivische Ansicht eines Ausführungsbeispiels der erfindungsgemäßen Vorrichtung zum Festspannen von zwei Bauteilen, die durch Reibrührschweißen miteinander verbunden werden sollen.

Die erfindungsgemäße Vorrichtung umfasst unter anderem eine Grundplatte 1, einen Unterbau 2, eine Schweißunterlage 3 sowie die Halteeinrichtungen 4,5. Auf beiden Seiten des Unterbaus 2 sind eine Vielzahl von Stützelementen angeordnet. Die Stützelemente sind vorzugsweise jeweils gleichmäßig zueinander beabstandet matrixförmig angeordnet. In der Darstellung der Fig. 1 sind der besseren zeichnerischen Darstellung halber lediglich die Stützelemente 6 bis 16 dargestellt.

Auf den Halteeinrichtungen 4,5 sowie den Stützelementen 6 bis 16 ruht ein erstes Bauteil 17 und ein zweites Bauteil 18. Bei den Bauteilen 17,18 kann es sich um Bleche oder auch um komplexere Komponenten, wie zum Beispiel Segmente von Rumpfschalen oder dergleichen, handeln.

Die Bauteile 17,18 werden in einem Nahtbildungsbereich 19 entlang der Bauteilkanten 20,21 durch die Schweißnaht 22 verbunden. Die Schweißnaht 22 wird durch Reibrührschweißen mittels eines geeigneten Reibrührschweißwerkzeuges 23 in bekannter Weise gebildet, das an einem Werkzeugträger 24 angeordnet ist. Der Werkzeugträger 24 wird beispielsweise mittels eines nicht näher dargestellten, rechnergesteuerten Portalroboters in Richtung des Pfeils 25 entlang der Bauteilkanten 20,21 zur Bildung der Schweißnaht 22 gerührt.

Da beim Reibrührschweißen erhebliche mechanische Kräfte auftreten, müssen die Bauteile 17,18 mittels der erfindungsgemäßen Vorrichtung sicher fixiert bzw. festgespannt werden. Der Nahtbildungsbereich 19 liegt lose auf der Schweißunterlage 3 auf. Die Halteeinrichtungen 4,5 weisen auf ihren, zu den Bauteilen 17,18 weisenden Oberseiten eine Vielzahl von nicht näher dargestellten Kanälen auf, die mit Unterdruck beaufschlagt werden können.

Die Kanäle können beispielsweise schachbrettartig in die Oberseiten der Halteeinrichtungen 4,5 eingefräst oder auf andere Art und Weise eingebracht sein. Alternativ kann auch eine Matrix von Bohrungen in die Oberseiten der Halteeinrichtungen 4,5 eingebracht sein, um einen Unterdruck zwischen den Bauteilen 17,18 und den Halteeinrichtungen 4,5 aufbauen zu können.

In den Randbereichen der Halteeinrichtungen 4,5 sind weiterhin Dichtleisten angeordnet, um den Unterdruck zwischen den Bauteilen 17,18 sowie den Halteeinrichtungen 4,5 aufrechtzuerhalten. Infolge des zwischen den Bauteilen 17,18 und den Halteeinrichtungen 4,5 bestehenden Unterdrucks, werden die Bauteile 17,18 durch den Umgebungsluftdruck mit einer hohen Andruckkraft auf die Halteeinrichtungen 4,5 angedrückt. Auf Grund der in der Regel großformatigen Bauteile 17,18 lassen sich somit relativ hohe Andruckkräfte erzeugen, sodass sich die Bauteile 17,18 auch bei hohen Vortriebsgeschwindigkeiten des Reibrührschweißwerkzeuges 23 nicht verschieben.

Die Halteeinrichtungen 4,5 sind mit dem Unterbau 2 lösbar, beispielsweise durch Schraubverbindungen, Klemmverbindungen, Verriegelungen oder dergleichen verbunden, um eine leichte Austauschbarkeit der Halteeinrichtungen 4,5 in Abhängigkeit von der Geometrie und/oder den Abmessungen der fest zu spannenden Bauteilen 17,18 zu gewährleisten. Darüber hinaus kann auch der Unterbau 2 lösbar auf der Grundplatte 1 befestigt sein, um eine höhere Flexibilität hinsichtlich unterschiedlicher Bauteile zu erreichen.

Zur Unterstützung der Wirkung der Halteeinrichtungen 4,5, insbesondere bei großformatigen Bauteilen 17,18, weist die Vorrichtung weiterhin die Stützelemente 6 bis 16 auf. Die Stützelemente 6 bis 16 können jeweils in Richtung der schwarzen Doppelpfeile, also in z-Richtung, unabhängig voneinander verfahren werden. Hierdurch wird es möglich, auch Bauteile mit unterschiedlichen Abmessungen und/oder Geometrien durch die erfindungsgemäße Vorrichtung sicher und fest einzuspannen. Weiterhin können die Stützelemente 6 bis 16 auch in der x-und y Richtung verfahrbar ausgebildet sein.

Die Schweißunterlage 3 und die Oberseiten der Halteeinrichtungen 4,5 bilden eine in etwa durchgehende Auflagefläche 26, auf der die Bauteile 17,18 beidseitig von den Bauteilkanten 20,21 aufliegen. Diese fiktive Auflagefläche 26 setzt sich nach beiden Seiten hin in Form der matrixartig angeordneten Stützelemente 6 bis 16 fort.

Zur Verbesserung der Unterstützungswirkung sämtlicher Stützelemente 6 bis 16 weisen diese endseitige Anbindungselemente, beispielsweise in der Form von Saugnäpfen 27 bis 30, auf. Hierbei sind sämtliche Stützelemente 6 bis 16 sowie die weiteren, nicht dargestellten Stützelemente mit Saugnäpfen ausgestattet, wobei die Saugnäpfe 27 bis 30 stellvertretend für die nicht darstellbaren Saugnäpfe in der Darstellung der Fig. 1 eingezeichnet sind. In diesem Zusammenhang ist zu bemerken, dass die Stützelemente zur Erzielung einer ausreichenden Spannwirkung der Vorrichtung nicht zwingend mit Saugnäpfen ausgestattet sein müssen. Die von den Halteeinrichtungen 4,5 durch Unterdruck erzeugten Andruckkräfte reichen im Allgemeinen für eine sichere Fixierung während des Reibrührschweißvorganges aus. Zur weiteren Verbesserung der Spannwirkung der Halteeinrichtungen 4,5 kann der Werkzeugträger 24 eine Andruckrolle 31 aufweisen. Durch die Andruckrolle 31 werden die Bauteilkanten 20,21, unmittelbar bevor das Reibrührschweißwerkzeug 23 die Bauteile 17,18 im Nahtbildungsbereich 19 verschweißt, nochmals fest an die Schweißunterlage 3 angedrückt. Auch die Andruckrolle 31 ist zur Erzielung einer ausreichenden Andruckkraft im Bereich der Bauteilkanten 20,21 im Nahtbildungsbereich 19 nicht zwingend erforderlich.

Durch die vorstehend geschilderten Maßnahmen zum Festspannen der Bauteile 17,18 ist ein Verrutschen der Bauteile 17,18 während des Reibrührschweißvorganges ausgeschlossen, sodass die Bauteile 17,18 mit höchster Maßhaltigkeit durch Reibrührschweißen verbunden werden können.

Je höher eine Materialstärke der Bauteile 17,18 ist, desto höher muss eine Breite 32,33 der Halteeinrichtungen 4,5 gewählt werden, um ausreichend hohe Andruckkräfte durch die Erzeugung des Unterdrucks zu erreichen.

Sollen mittels der erfindungsgemäßen Vorrichtung Bauteile 17,18 mit einer von der Darstellung der Fig. 1 abweichenden geometrischen Gestalt festgespannt werden, so ist es erforderlich, zumindest die Halteeinrichtungen 4,5 auszutauschen und durch entsprechend an die geometrische Gestalt der Bauteile angepasste Halteeinrichtungen zu ersetzen. Durch eine entsprechende Gestaltung der Oberseiten der jeweils vorgehaltenen Halteeinrichtungen sowie deren Breiten ist es möglich, die erfindungsgemäße Vorrichtung mit minimalem Aufwand an eine Vielzahl von verschiedenen Bauteilen mit unterschiedlichen geometrischen Abmessungen anzupassen. Insbesondere ist es auch möglich, komplexe, einfach und/oder doppelt gekrümmte Bauteile durch den bloßen Austausch von entsprechend gestalteten Halteeinrichtungen sicher und fest einzuspannen. Es kann darüber hinaus auch erforderlich sein, spezielle Unterbauten sowie spezielle Schweißunterlagen zur Anpassung an Bauteilgeometrien und/oder Größenabmessungen von bestimmten Bauteilen bereitzuhalten. Im Außenbereich der Bauteile erfolgt die Fixierung dann mittels des an eine Vielzahl von unterschiedlichen Bauteilgeometrien und/oder Abmessungen adaptierbaren, aus einer Vielzahl von matrixartig angeordneten Stützelementen gebildeten, so genannten "Stützelement-Feldes".

Erfindungsgemäß ist es aber nicht mehr erforderlich, für jede im Produktionsprozess auftretende Bauteilgeometrie eine vollständige, individuelle Spannvorrichtung vorzuhalten, wodurch sich eine beträchtliche Kosten- und Zeitersparnis ergibt.

Auf beiden Seiten des Unterbaus 2 sind weiterhin Positionierorgane 34,35 angeordnet, mittels derer eine Feinpositionierung der aufgelegten Bauteile 17,18 in Bezug auf die Schweißunterlage 3 möglich ist. Hierbei sind in der Darstellung der Fig. 1 lediglich zwei Positionierorgane 34,35 dargestellt. Weitere Positionierorgane sind zur Erreichung einer effizienteren Positionierung der Bauteile 17,18 entlang der x-Richtung zu beiden Seiten des Unterbaus 2, vorzugsweise jeweils gleichmäßig zueinander beabstandet, angeordnet. Die Positionierorgane 34,35 weisen jeweils Anbindungselemente, beispielsweise Saugnäpfe 36,37, zur wieder lösbaren Befestigung an den Bauteilen 17,18 auf. Die Saugnäpfe 36,37 sind wiederum repräsentativ für die weiteren, nicht näher dargestellten Anbindungselemente an den Positionierorganen.

Der Unterbau 2, die Grundplatte 1 sowie die Halteeinrichtungen 4,5 sind mit einem metallischen Material, beispielsweise mit einer Aluminiumlegierung, mit Stahl oder dergleichen gebildet. Abweichend von der beschriebenen Materialwahl können zumindest die Halteeinrichtungen 4,5 auch mit einem nur gering Wärme leitenden Material, beispielsweise mit einem geeigneten Keramik- und/oder Kunststoffmaterial gebildet sein. Hierdurch wird der Wärmeabfluss aus dem Nahtbildungsbereich 19 vermindert, sodass mit dem Reibrührschweißwerkzeug 23 höhere Vortriebsgeschwindigkeiten bei gleicher Qualität der Schweißnaht erreicht werden können.

Die Bauteile 17,18 weisen im Nahtbildungsbereich 19 weiterhin kleine Auslaufbereiche 38,39 auf, die nach dem Abschluss des Reibrührschweißvorganges abgetrennt werden. Die Auslaufbereiche sind, wie in der Darstellung der Fig. 1 exemplarisch gezeigt, in der Form von kleinen laschenförmigen Fortsetzungen ausgeführt. Hierdurch wird erreicht, dass die Schweißnaht 22 immer vollständig bis an eine vordere bzw. eine hintere Bauteilkante der Bauteile 17,18 heran läuft. Würde das Reibrührschweißwerkzeug 23 dagegen nur bis zu der vorderen, beziehungsweise der hinteren Bauteilkante geführt werden, so wäre die Schweißnaht 22 in diesen Randbereichen nur unvollständig ausgebildet.

### Bezugszeichenliste

- 1: Grundplatte
- 2: Unterbau
- 3: Schweißunterlage
- 4: Halteeinrichtung
- 5: Halteeinrichtung
- 6: Stützelement
- 7: Stützelement
- 8: Stützelement
- 9: Stützelement
- 10: Stützelement
- 11: Stützelement
- 12: Stützelement
- 13: Stützelement
- 14: Stützelement
- 15: Stützelement
- 16: Stützelement
- 17: erstes Bauteil
- 18: zweites Bauteil
- 19: Nahtbildungsbereich
- 20: Bauteilkante
- 21: Bauteilkante
- 22: Schweißnaht
- 23: Reibrührschweißwerkzeug
- 24: Werkzeugträger
- 25: Pfeil
- 26: Auflagefläche
- 27: Saugnapf
- 28: Saugnapf
- 29: Saugnapf
- 30: Saugnapf
- 31: Andruckrolle
- 32: Breite
- 33: Breite
- 34: Positionierorgan
- 35: Positionierorgan
- 36: Saugnapf
- 37: Saugnapf
- 38: Auslaufbereich
- 39: Auslaufbereich

## Patentansprüche

1. Vorrichtung zum Festspannen von mindestens zwei Bauteilen (17,18), insbesondere von Bauteilen (17,18) für Luftfahrzeuge, zur Verbindung der Bauteile (17,18) durch eine mittels Reibrührschweißen zwischen zwei Bauteilkanten (20,21) gebildete Schweißnaht (22), wobei die Bauteile (17,18) jeweils durch mehrere Stützelemente (6-16) aufgenommen sind und unterhalb der Schweißnaht (22) eine Schweißunterlage (3) angeordnet ist, **dadurch gekennzeichnet, dass** die Schweißunterlage (3) auf beiden Seiten jeweils mindestens eine Halteeinrichtung (4,5) mit einer Vielzahl von Kanälen aufweist, die zum Festspannen der Bauteile (17,18) mit Unterdruck beaufschlagbar sind.

2. Vorrichtung nach Anspruch 1, **dadurch gekennzeichnet, dass** die Halteeinrichtungen (4,5) lösbar auf einem Unterbau (2) befestigt sind.

3. Vorrichtung nach Anspruch 1 oder 2, **dadurch gekennzeichnet, dass** eine Oberflächengeometrie der Halteeinrichtungen (4,5) an eine Oberflächengeometrie der Bauteile (17,18) und/oder an Abmessungen der Bauteile (17,18) angepasst ist.

4. Vorrichtung nach einem der Ansprüche 1 bis 3, **dadurch gekennzeichnet, dass** eine Breite (32,33) der Halteeinrichtungen (4,5) insbesondere an unterschiedliche Materialstärken der Bauteile (17,18) angepasst ist.

5. Vorrichtung nach einem der Ansprüche 1 bis 4, **dadurch gekennzeichnet, dass** die Schweißunterlage (3) im Wesentlichen mittig unterhalb der Schweißnaht (22) in einem Nahtbildungsbereich (19) angeordnet ist und austauschbar ausgebildet ist.

6. Vorrichtung nach einem der Ansprüche 1 bis 5, **dadurch gekennzeichnet, dass** die Schweißunterlage (3) und die Halteeinrichtungen (4,5) eine Auflagefläche (26) bilden.

7. Vorrichtung nach einem der Ansprüche 1 bis 6, **dadurch gekennzeichnet, dass** die Bauteile (17,18) im Nahtbildungsbereich (19) mittels mindestens eines Andruckorgans, insbesondere einer Andruckrolle (31), auf die Schweißunterlage (3) andrückbar sind.

8. Vorrichtung nach einem der Ansprüche 1 bis 7, **dadurch gekennzeichnet, dass** die Stützelemente (6-16) zur Anpassung an unterschiedliche Oberflächengeometrien und/oder Abmessungen der Bauteile (17,18) verfahrbar ausgebildet sind.

9. Vorrichtung nach einem der Ansprüche 1 bis 8, **dadurch gekennzeichnet, dass** die Stützelemente (6-16) Anbindungselemente, insbesondere Saugnäpfe (27-30) zum Fixieren der Bauteile (17,18) aufweisen.

10. Vorrichtung nach einem der Ansprüche 1 bis 9, **dadurch gekennzeichnet, dass** die Halteeinrichtungen (4,5) und/oder der Unterbau (2) mit einem wärmeisolierenden Material gebildet sind.

11. Vorrichtung nach einem der Ansprüche 1 bis 10, **dadurch gekennzeichnet, dass** im Bereich der Halteeinrichtungen (4,5) und/oder des Unterbaus (2) mindestens ein Positionierorgan (34,35) zum Heranführen und/oder zur Ausrichtung der Bauteile (17,18) auf der Schweißunterlage (3) und/oder den Halteeinrichtungen (4,5) angeordnet ist.

## Claims

1. A device for clamping at least two components (17, 18), in particular components (17, 18) for aircraft, in order to join the components (17, 18) by means of a weld seam (22) formed between two component edges (20. 21) via friction stir welding, wherein the components (17, 18) each are accommodated by several supporting elements (6-16) and a welding backup plate (3) is arranged under the weld seam (22), **characterized in that** both sides of the welding backup plate (3) each have at least one mounting device (4, 5) with a plurality of channels, which can be placed under negative pressure for clamping the components (17, 18).

2. The device according to claim 1, **characterized in that** the mounting devices (4, 5) are detachably secured to a substructure (2).

3. The device according to claim 1 or 2, **characterized in that** a surface geometry of the mounting devices (4, 5) is tailored to a surface geometry of the components (17, 18) and/or to dimensions of the components (17, 18).

4. The device according to one of claims 1 to 3, **characterized in that** a width (32, 33) of the mounting devices (4, 5) is especially tailored to varying material thicknesses of the components (17, 18).

5. The device according to one of claims 1 to 4, **characterized in that** the welding backup plate (3) is essentially arranged centrally below the weld seam (22) in a weld formation area (19) and replaceably designed.

6. The device according to one of claims 1 to 5, **characterized in that** the welding backup plate (3) and the mounting devices (4, 5) form a support surface (26).

7. The device according to one of claims 1 to 6, **characterized in that** the components (17, 18) in the weld formation area (19) can be pressed against the welding backup plate (3) by at least one contact element, in particular a pressure roller (31).

8. The device according to one of claims 1 to 7, **characterized in that** the support elements (6-16) are movable for purposes of adjustment to various surface geometries and/or dimensions of the components (17, 18).

9. The device according to one of claims 1 to 8, **characterized in that** the support elements (6-16) have connecting elements, in particular suction cups (27-30), for fixing the components (17, 18) in place.

10. The device according to one of claims 1 to 9, **characterized in that** the mounting devices (4, 5) and/or the substructure (2) are provided with a heat-insulating material.

11. The device according to one of claims 1 to 10, **characterized in that** at least one positioning unit (34, 35) is arranged in the area of the mounting devices (4, 5) and/or the substructure (2) in order to advance and/or align the components (17, 18) relative to the welding backup plate (3) and/or mounting devices (4, 5).

## Revendications

1. Dispositif destiné au serrage d'au moins deux composants (17, 18), en particulier de composants (17, 18) pour aéronefs, pour l'assemblage des composants (17, 18) par un joint soudé (22) formé par soudage par agitation - friction entre deux arêtes (20, 21) des composants, les composants (17, 18) étant reçus respectivement par plusieurs éléments d'appui (6 - 16) et un substrat de soudure (3) étant disposé au-dessous du joint soudé (22), **caractérisé en ce que** le substrat de soudure (3) présente sur chacun des deux côtés au moins un dispositif de retenue (4, 5) avec une multiplicité de canaux, qui peuvent être sollicités en dépression pour le serrage des composants (17, 18).

2. Dispositif suivant la revendication 1, **caractérisé en ce que** les dispositifs de retenue (4, 5) ont une fixation amovible sur un soubassement (2).

3. Dispositif suivant l'une des revendications 1 et 2, **caractérisé en ce qu'**une géométrie de surface des dispositifs de retenue (4, 5) est adaptée à une géométrie de surface des composants (17, 18) et/ou aux dimensions des composants (17, 18).

4. Dispositif suivant l'une des revendications 1 à 3, **caractérisé en ce qu'**une largeur (32, 33) des dispositifs de retenue (4, 5) est adaptée en particulier aux épaisseurs de matériau différentes des composants (17, 18).

5. Dispositif suivant l'une des revendications 1 à 4, **caractérisé en ce que** le substrat de soudure (3) est disposé essentiellement au centre au-dessous du joint soudé (22) dans une zone de formation de joint (19) et a une réalisation interchangeable.

6. Dispositif suivant l'une des revendications 1 à 5, **caractérisé en ce que** le substrat de soudure (3) et les dispositifs de retenue (4, 5) forment une surface d'appui (26).

7. Dispositif suivant l'une des revendications 1 à 6, **caractérisé en ce que** les composants (17, 18) peuvent être pressés sur le substrat de soudure (3), dans la zone de formation du joint (19), au moyen d'au moins un organe de pression, en particulier d'un rouleau de pression (31).

8. Dispositif suivant l'une des revendications 1 à 7, **caractérisé en ce que** les éléments d'appui (6-16) sont réalisés avec une possibilité de déplacement pour l'adaptation à différentes géométries de surface et/ou dimensions des composants (17, 18).

9. Dispositif suivant l'une des revendications 1 à 8, **caractérisé en ce que** les élément d'appui (6-16) présentent des éléments d'attache, en particulier des ventouses (27 - 30), pour la fixation des composants (17, 18).

10. Dispositif suivant l'une des revendications 1 à 9, **caractérisé en ce que** les dispositifs de retenue (4, 5) et/ou le soubassement (2) sont formés d'un matériau calorifuge.

11. Dispositif suivant l'une des revendications 1 à 10, **caractérisé en en ce qu**'au moins un organe de positionnement (34, 35) pour l'approche et/ou l'alignement des composants (17, 18) sur le substrat de soudure (3) et/ou sur les dispositifs de retenue (4, 5) est disposé dans la zone des dispositifs de retenue (4, 5) et/ou du soubassement (2).
